(19)

**Europäisches Patentamt**

**European Patent Office**

**Office européen des brevets**

(11) **EP 4 546 064 A1**

(12) **EUROPEAN PATENT APPLICATION**

(43) Date of publication:
**30.04.2025 Bulletin 2025/18**

(21) Application number: **23205903.0**

(22) Date of filing: **25.10.2023**

(51) International Patent Classification (IPC):
**G05B 19/402** $^{(2006.01)}$

(52) Cooperative Patent Classification (CPC):
**G05B 19/402**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nederlandse Organisatie voor
toegepast-natuurwetenschappelijk Onderzoek
TNO
2595 DA 's-Gravenhage (NL)**

(72) Inventor: **SNEL, Robert
2595 DA 's-Gravenhage (NL)**

(74) Representative: **V.O.
P.O. Box 87930
2508 DH Den Haag (NL)**

(54) **REPOSING METHOD AND APPARATUS**

(57) The present application provides means for reposing relative to each other a 3-dimensional workpiece (WP) and a 3-dimensional model of the workpiece relative to each other. A computer implemented method in accordance therewith comprises:

obtaining a 3-dimensional boundary representation (RI) of a boundary defining volume for the workpiece;

repeating steps of an iterative procedure until a stop criterion is complied with;

wherein each iteration of the iterative procedure comprises:

computing (S3) an error measure based on a plurality of error indicators

performing (S4) a spatial transformation to reduce the error measure;

wherein each error indicator is indicative for a distance between a reference position of the 3-dimensional representation of a reference model of the workpiece and a position of the 3-dimensional boundary representation of the workpiece and

wherein the error indicator is weighted according to a weighting function that assigns a smaller weight to an error indicator if the reference position is inside the boundary defining volume than to an error indicator having the same magnitude if the reference position is outside the boundary defining volume.

FIG. 6

EP 4 546 064 A1

**Description**

BACKGROUND

The present application further pertains to a computer-implemented method for reposing relative to each other a workpiece and a reference model of the workpiece having a 3-dimensional reference representation relative to each other.

The present application further pertains to a record carrier having stored thereon a computer program with instructions to cause a programmable device to perform the steps of the computer-implemented method.

The present application still further pertains to an apparatus for reposing relative to each other a workpiece and a reference model of the workpiece having a 3-dimensional reference representation relative to each other.

The present application also pertains to an apparatus for processing a workpiece.

In automated manufacturing systems it is essential that a workpiece of arbitrary size and shape and an internal reference representation are properly posed relative to each other, for performing operations on the workpiece, or for other purposes, such as inspection or packaging.

Typically, the workpiece has been designed in a computer aided design system which provides a reference model of the workpiece in a reference coordinate system. Alternatively a reference model may be provided by an automatic design system that provides the reference model on the basis of a meta-model and customer requirements.

During processing the workpiece may be manufactured by various manufacturing steps from a raw material or may be assembled from components. The manufacturing steps may be of an additive nature, such as 3D-printing or of subtractive nature, such as drilling, milling, sawing etc. In each of these steps it is necessary that the workpiece has the proper position and orientation relative to the manufacturing tools. Even if the position and orientation may be known at one point in time the proper orientation may be lost during transport of the workpiece.

Accordingly, there is a need for measures that facilitate an automatic posing of the workpiece relative to a reference model or reversely.

SUMMARY

Therefore, in accordance with a first aspect of the present disclosure an improved computer-implemented method for reposing a workpiece relative to a reference model is provided.

Also, according to a second aspect of the present disclosure a record carrier is provided that stores a computer program with instructions to cause a programmable device to perform the steps of the improved computer-implemented method.

According to a third aspect of the present disclosure an improved apparatus is provided for reposing relative to each other a workpiece and a reference model.

According to a fourth aspect of the present disclosure an improved apparatus for processing a workpiece is provided.

The improved computer-implemented method for reposing comprises the steps of

obtaining a 3-dimensional boundary representation of a boundary defining volume for the workpiece;
and repeating steps of an iterative procedure until a stop criterion is complied with.

In one example the apparatus for processing a workpiece is configured to perform machining operations to a block of material. In that case the method for reposing may repose the reference model in accordance with the pose of the block of material. Therewith it is required that the contour of the workpiece as specified by a reference model as it is to be manufactured fits within the volume of the block of material. Therewith the apparatus for processing is enabled to manufacture a result in accordance with the reference model. In one example the 3-dimensional boundary representation of the boundary defining volume are known beforehand, and can be obtained from e.g. a database. In another example the 3-dimensional boundary representation is obtained with an imaging system, e.g. a stereo camera or a laser scanner.

In another example, the apparatus serves to accommodate a manufactured workpiece into a package, the latter being the boundary defining volume. Also in this example, the package may have known specifications that can be obtained from a database or the 3-dimensional boundary representation of the boundary defining volume may be obtained with an imaging system.

Each iteration of the iterative procedure comprises computing an error measure based on a plurality of error indicators and performing a spatial transformation to reduce the error measure. As set out below the error indications on which the error measure is based may be obtained in various ways. The spatial transformation that reduces the error measure between the digital representations is then used to properly repose the workpiece. Herein the operation of reposing a workpiece is understood to include setting the workpiece in the correct position and orientation. Alternatively, the workpiece maintains its original pose and the spatially transformed digital representation is used to control a machine tool or to manipulate a package to envelop the workpiece.

The error indicators are indicative for a distance between a reference position of the 3-dimensional reference representation of the workpiece and a corresponding position of the 3-dimensional boundary representation.

In the improved computer-implemented method the error indicator is weighted according to a weighting function. The weighting function assigns a smaller weight to an error indicator if the reference position is determined to be inside the boundary defining volume defined by the 3-dimensional boundary representation than to an error indicator having the same magnitude if the reference position is outside the boundary defining volume.

Therewith, in the example wherein a workpiece is manufactured it is actually achieved that the volume of the object to be produced falls within the limits of the raw material from which it is to be manufactured. Analogously, in the example wherein a workpiece is to be packaged it is achieved that it properly fits into the package.

Various options are available to determine whether or not the reference position is inside the boundary defining volume. In one embodiment determining whether or not the reference position is inside the boundary defining volume comprises: constructing a line that extends from the reference position and that has a first intersection with the surface of the boundary defining volume an subsequently determining an angle of the constructed line with the surface normal at the intersection. If the angle is less than $\pi/2$ it is determined that the reference position is outside the boundary defining volume. Otherwise it is determined that the reference position is inside the boundary defining volume. For example, if the surface of the boundary defining volume is defined with a triangle representation and then the angle is the angle of the constructed line with the surface normal of the intersected triangle of the triangle based representation.

In another embodiment determining whether or not the reference position is inside the boundary defining volume comprises constructing a pseudo-infinite line that extends from the reference position to a boundary of space wherein the method is performed. The boundary of space wherein the method is performed is determined by the number of bits that is used for representing the coordinates. In this embodiment, it is determined whether a number of intersections between the pseudo-infinite line and the surface of the boundary defining volume is odd or even. If the number is even, e.g. 0, 2, 4 etc. it is determined that the reference position is outside the boundary defining volume. Otherwise it is determined that the reference position is inside the boundary defining volume otherwise. For example in case the surface of the boundary defining volume is defined with a triangle representation it is determined whether the intersected number of triangles is odd or even.

The first embodiment for determining whether or not the reference position is inside the boundary defining volume has the advantage that it is sufficient to construct a linepiece that has a single intersection with the boundary defining volume or with the boundary of the computational space. The second embodiment is advantageous in that it is not necessary to compute an angle with the surface normal.

Various options are possible for computing the error indicator.

In some embodiments the error indicator is the squared distance between an input position on a surface specified by a first one of the 3-dimensional representations and a matching position on a surface specified by a second one of the 3-dimensional representations.

In other embodiments the error indicator is the squared distance between an input position on a surface specified by a first one of the 3-dimensional representations and a normal projection of the input position on a tangential plane of a second one of the 3-dimensional representations at a matching position of the surface specified by the second one of the 3-dimensional representations.

In again other embodiments the error indicator is the squared sum of a first distance and a second distance, respectively being the distances from an input position and a matching position in a direction normal to a center plane, wherein the input position is a first point of a first one of the 3-dimensional representations and the matching position is a point, closest to the first point, of the second one of the 3-dimensional representations, and wherein the center plane is a plane that is symmetrically arranged between a first tangential plane of the first one of the 3-dimensional representations at the first point and a second tangential plane of the second one of the 3-dimensional representations at the second point.

It will be clear from the foregoing that the shape of the 3-dimensional reference model is not necessarily identical to the shape of the boundary defining volume. It may be the case that the boundary defining volume is imposed by the shape of a block of raw material and that the 3-dimensional reference model specifies the shape to be obtained by operations thereon. Analogously, the shape of a boundary defining volume of a package may be different from the shape of an object to be packaged therein.

Nevertheless, also in that case it is important that the workpiece is properly registered, i.e. has the correct position and orientation. For example if the reference model specifies an elongate sculpture and the workpiece to be processed is an elongate block then the elongate block should be registered such that the volume of the sculpture fits inside the volume of the block. It is clear that in that case the error measure defining the mismatch between of the poses of the digital registrations cannot be reduced to zero. In that case a threshold value for the error measure can be specified that is achievable if the block is registered in a manner that it encloses the volume of the reference model specifying the product to be achieved by the operation to be performed thereon.

Likewise, in case the workpiece is a final product that has to be packaged in a box, then the 3 dimensional representation of the workpiece and the 3-dimensional representation of the box will have a different shape. It is sufficient in that case that the workpiece is registered in an orientation that allows it to be placed in the box.

BRIEF DESCRIPTION OF THE DRAWINGS

These and other details are described in more detail with reference to the drawings. Therein

FIG. 1 schematically shows an embodiment of an improved processing apparatus comprising an improved reposing apparatus;
FIG. 2 shows a computation performed by the apparatus;
FIG. 2A shows a further, optional computation performed by the apparatus;
FIG. 3 shows further aspects of this computation;
FIG. 4A, 4B, 4C and 4CC schematically show three exemplary approaches to compute a registration mismatch of a workpiece;
FIG. 5 illustrates an auxiliary computation;
FIG. 5A illustrates an alternative auxiliary computation;
FIG. 5B illustrates another alternative auxiliary computation;
FIG. 6 depicts an embodiment of the computer implemented method.

DETAILED DESCRIPTION OF EMBODIMENTS

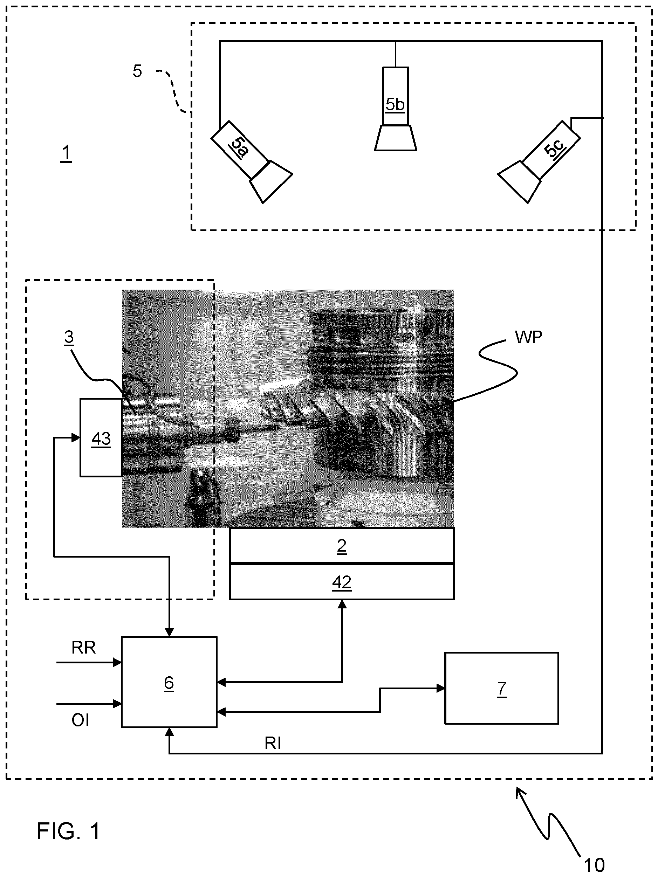

FIG. 1 schematically shows an embodiment of an improved reposing apparatus 1 for reposing a workpiece WP and a reference model of the workpiece having a 3-dimensional reference representation RR relative to each other. In one embodiment it reposes the workpiece given a fixed pose of the 3-dimensional reference representation RR. Preferably, and if possible, the workpiece WP is maintained in a fixed pose and the 3-dimensional reference representation RR is reposed to comply with the pose of the workpiece as the latter requires no physical effort. In the embodiment shown, the improved reposing apparatus 1 is part of a processing apparatus 10. The embodiment of the processing apparatus 10 comprising the improved reposing apparatus 1 as shown in FIG. 1 comprises a holder 2, a machining tool 3, an actuator system 42, 43, an imaging system 5; 5a, 5b, 5c and a controller 6.

The holder 2 is configured for holding the workpiece WP for example by clamps. The machining tool 3 is configured for processing the workpiece WP, for example by cutting, sawing, drilling, painting and the like.

The actuator system 42, 43 is configured for setting an orientation of the machining tool 3 and the workpiece WP relative to each other. In the example shown the actuator system comprises first actuator elements 42, for example an xyz-table to set the orientation of the workpiece WP and second actuator elements 43 to set an orientation of the machining tool 3. The first actuator elements 42 and the second actuator elements 43 cooperate to set the orientation of the machining tool 3 and the workpiece WP relative to each other. In alternative examples the orientation of the machining tool 3 and the workpiece WP relative to each other is set entirely by first actuator elements 42 that control an orientation of the machining tool 3, and in again alternative examples the orientation of the machining tool 3 and the workpiece WP relative to each other is set entirely by second actuator elements 43 that set an orientation of the machining tool 3.

The imaging system 5, in this example comprising imaging units 5a, 5b, 5c, is configured for obtaining a 3-dimensional imaged representation RI of a boundary defining volume for the workpiece WP, for example a block of raw material from which the workpiece is to be manufactured according to its 3-dimensional reference representation or a package in which a manufactured product is to be inserted. In an example the imaging system comprises a stereoscopic camera system. In another example the imaging system comprises a RGBD camera system. In again another example the imaging system comprises a laser scanner which constructs the representation from measured path length differences. In again another example the imaging system projects a grid on the workpiece and obtains the 3-dimensional digital representation from camera images of the projected grid. The 3-dimensional imaged representation RI is for example provided as point cloud, as a mesh or as a voxel representation. As noted above, an imaging system is not essential in case a 3-dimensional representation RI of the boundary defining volume is already available in a database or the like. For example it may be the case that the boundary defining volume is specified in the database by a width, a height and a depth.

The controller 6 is configured for controlling the actuator system 42, 43 based on a comparison of the 3-dimensional boundary representation RI obtained with the imaging system or from storage system and a 3-dimensional reference representation RR of a reference model.

To this end the controller 6 is configured to repeat steps of an iterative procedure until a stop criterion is complied with. In each iteration the controller 6 computes an error measure E based on a plurality of error indicators $e_i$ and computes a spatial transformation h() to reduce the error measure E. Each error indicator $e_i$ has a magnitude $|e_i|$ indicative for a distance between a reference position $x_i$ of the 3-dimensional reference representation RR and an input position $y_i$ of the 3-dimensional boundary representation RI obtained with the imaging system.

For analytical tractability the error indicator typically is a quadratic cost function and the computation of the error measure E involves a summation.

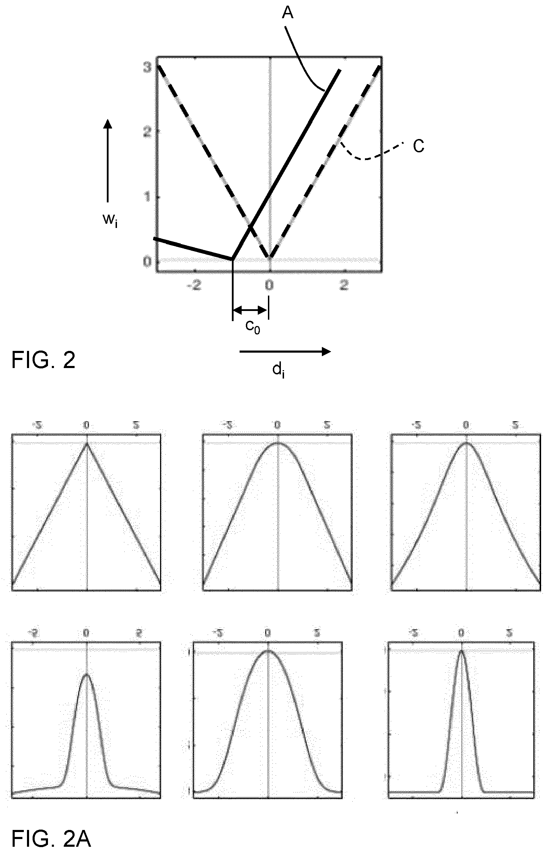

FIG. 2 shows that the controller 6 when computing the error measure E weights the error indicator $e_i$ according to a weighting function wi that assigns a smaller weight to an error indicator if the reference position $y_i$ is determined to be inside the boundary defining volume than to an error indicator having a same magnitude if the reference position $y_i$ is determined to be outside that volume.

Therewith the error measure E can be defined as:

$$ E = \sum_i w_i \cdot e_i $$

By assigning a relatively small weight to an error indicator that is associated with a reference position $y_i$ of the 3-dimensional reference representation inside the boundary defining volume as compared to an error indicator that is associated with a reference position $y_i$ outside the boundary defining volume, the algorithm is primarily driven by error terms resulting from points of the reference object that are outside the boundary defining volume defined by the raw material or the package for example.

Hence the algorithm primarily computes a spatial transformation with which it is achieved that the workpiece to be manufactured according to the reference model actually fits within the block of material from which it is to be manufactured rather than trying to perfectly center the reference model with respect to the presently available volume of material as visible in the 3-dimensional imaged representation. This contributes to an efficient computation of the transformation function based on which machine parts are positioned relative to each other.

In an exemplary embodiment the weight $w_i$ is defined as:

$$ w_i(d_i) = \begin{cases} -c_1(d_i - c_0) \ if \ d_i \leq c_0 \\ c_2(d_i - c_0) \ if \ d_i \geq c_0 \end{cases} $$

Therein $c_0 \leq 0$, $e.g. c_0$ = -1 and $c_1 < c_2$, $e.g. c_1$ = 0.3 $and$ $c_2$ = 1.5

The variable $d_i$ is a signed distance. That is, the magnitude of this variable indicates the distance of the reference position $y_i$ to the boundary defining volume A negative sign indicates that the reference position $y_i$ is inside the boundary defining volume, and a positive sign indicates that the reference position $y_i$ is outside the boundary defining volume.

In the example shown, the parameter $c_0$ has a value different from zero. Therewith it is additionally achieved that a margin can be specified when performing operations, for example a milling margin to be maintained when milling a block of raw material. For example if the boundary defining volume is determined by the dimensions of a block of raw material and the product to be manufactured thereof is to be provided by drilling holes therein, then at the start of the process, the point of the drill should not coincide with the bottom of the drilling hole as specified by the reference model of the product, but coincide with the surface of the block.

The exemplary weighting function with $c_o$ = -1, $c_1$ = 0.3 $and$ $c_2$ = 1.5 is indicated in FIG. 2 as a solid curve A. For comparison FIG. 2 also shows a conventional, symmetrical, weighting function C. In some examples the weighting function is non-linear, that is the coefficients $c_1$ and $c_2$ may have a value dependent on the distance d.

In practical embodiments the controller 6, in each iteration only applies the spatial transformation hi() to control the actuator system 42, 43 after the stop criterion is complied with. Then controller 6 controls the actuator system 42, 43 so as to change an orientation of the machining tool 3 and the material to be processed relative to each other in accordance with the accumulative result of the individual spatial transformations computed in each step.

For completeness sake, it may be contemplated to update the position and orientation of the machining tool 3 and the workpiece WP relative to each other after each iteration or each time a predetermined number of iterations has been performed. Although this would be advantageous in that upon completion of the iterative procedure also the spatial transformation to be performed by the actuator system is completed this approach has proven to be less efficient. In terms of an amount of energy required for operating the actuator system 42, 43 the required spatial transformation can be performed more efficiently at once, after the stop criterion is complied with, then stepwise while the iterative procedure still proceeds. Provided that the reposing apparatus is properly calibrated, the required spatial transformation can already be computed in advance, before the workpiece is placed therein. Once it is placed, the actuator system 42, 43 can immediately execute the registration process, driven by the controller 6 in accordance with the pre-computed transformation..

In an example the stop criterion is a requirement that a magnitude of the error measure is less than a threshold value. In another example the stop criterion is a requirement that the steps of the iterative procedure have been performed a predetermined number of times. Also a combination of requirements is possible. For example primarily requiring that a magnitude of the error measure is less than a threshold value and secondarily requiring that the steps of the iterative procedure have been performed a predetermined number of times. For example the controller stops repeating the steps if the magnitude of the error measure has reduced below the threshold value regardless whether or not the iterative procedure has been performed a predetermined number of times. In case the magnitude of the error measure has not reduced below the threshold value when the iterative procedure has been performed a predetermined number of times the controller stops repeating the steps. In that case the controller may issue a warning signal indicative for a lack of convergence within the predetermined number of operations. Also in that case the controller may prevent that further processing steps take place to avoid that the workpiece is damaged.

In some examples the controller 6 is provided as dedicated hardware which is configured to operate in a predetermined manner. In the example shown, the controller 6 is a programmable device. As shown in FIG. 1 to that end the controller is coupled to a record carrier 7 that comprises a computer program with instructions to cause the controller to perform an embodiment of the improved method. This example is advantageous as the improved deposition system is versatile, in that it can be easily adapted to different requirements and circumstances.

In addition a further weighting of the pose transformation may be applied by a kernel function $k_n$ that suppresses contributions of outliers, resulting in:

$$error = \min \sum_i k_i \cdot w_i \cdot e_i$$

By way of example the kernel function $k_n$ is defined by a Gaussian with a sigma set to -twice the noise figure of the camera system. Dependent on the application the side lobes (towards infinity) may or may not be set to zero but a very small value to allow for at least some slight attraction. A small value is for example a value of the Gaussian at a position between 2*sigma and 4* sigma.

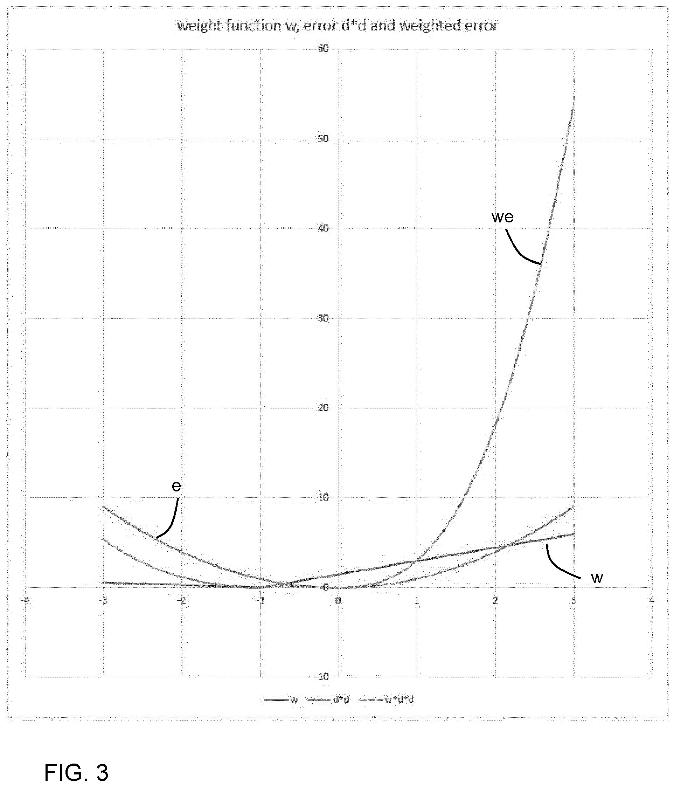

FIG. 3 shows an exemplary error function e, a weighting function w and a weighted error function we.

Various options are available to compute an error indicator $e_i$ indicative for a distance between a boundary position $x_i$ of the 3-dimensional boundary representation RI and reference position $y_i$ of the 3 dimensional reference representation RR.

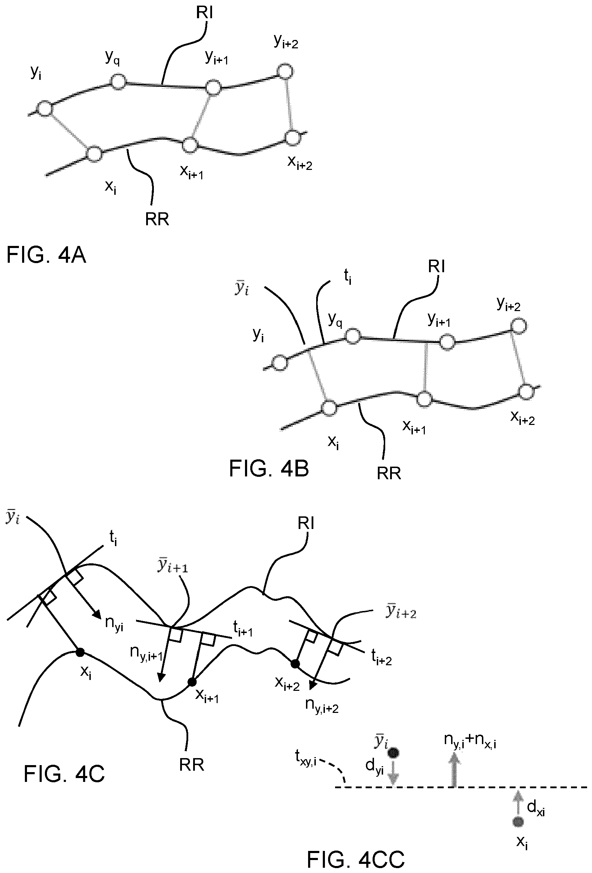

Three exemplary approaches point-to-point, point-to-plane and plane-to-plane are schematically shown in FIG. 4A, 4B, 4C and 4CC.

By way of example, in the **point-to-point** approach shown in FIG. 4A, the error indicator $e_i$ is the squared distance between closest points:

$$e_i = \|y_i - \bar{x}_i\|^2$$

Therein each $x_i$ is a point of the 3-dimensional boundary representation RI and $y_i$ is a point of the 3-dimensional reference representation RR that is closest to the point $x_i$. Pairs of points $x_i$, $y_i$ may be identified with a preprocessing algorithm. For example respective points $x_i$ can be matched with respective points $y_i$ using a Kdtree nearest neighbour matching algorithm. Alternatively, respective points $y_i$ can be matched with respective points $x_i$. This may result in slightly different, but statistically non-relevant results of matching point pairs.

The error measure E to be minimized can be computed from all available point pairs, but may alternatively be computed from a representative subset of point pairs.

In the **point-to-plane** approach as illustrated in FIG. 4B, the distance is determined between a source point $x_i$ and a tangent plane $t_i$ at the destination point $y_i$. Herein $\bar{y}_i$ is the position where the normal $n_{yi}$ of the tangent plane intersects the source point $x_i$.

$$e_i = \left( (x_i - \bar{y}_i) \cdot n_{y,i} \right)^2$$

In the **plane-to-plane** approach shown in FIG. 4C, and alternatively shown in FIG. 4CC, the following error indicator $e_i$ is computed:

$$e_i = \left( (x_i - \bar{y}_i) \cdot \left( n_{y,i} + n_{x,i} \right) \right)^2$$

This computation is equivalent to the computation:

$$e_i = \left(d_{xi} + d_{yi}\right)^2$$

Wherein $d_{xi}$, $d_{yi}$ respectively are the distances from the positions $x_i$, $\bar{y}_i$ in a direction normal to the center plane $t_{xy,i}$ that is symmetrically arranged between a first tangential plane at the point $x_i$ of a first one of the 3-dimensional representations (e.g. of the boundary defining volume) and a second tangential plane at a point $y_i$. of a second one of the 3-dimensional representations (e.g. of the reference model).

Various options are available to estimate whether or not the reference position yi is inside or outside the volume defined by the 3-dimensional boundary representation. For example if the 3-dimensional boundary representation is provided in a voxel based representation it can be determined whether or not the reference position coincides with one of the voxels of the 3-dimensional boundary representation. If the 3-dimensional boundary representation is provided as the corner coordinates of a block, it can be determined that the reference position yi is inside the block if each coordinate of the reference position is within the respective range for the respective coordinate spanned by the block.

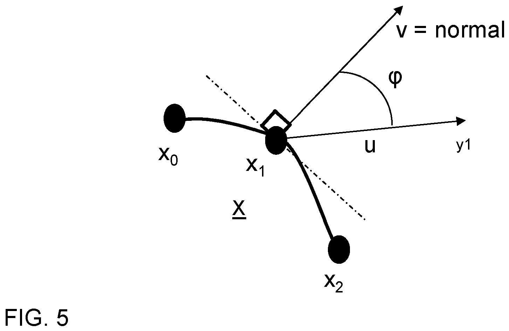

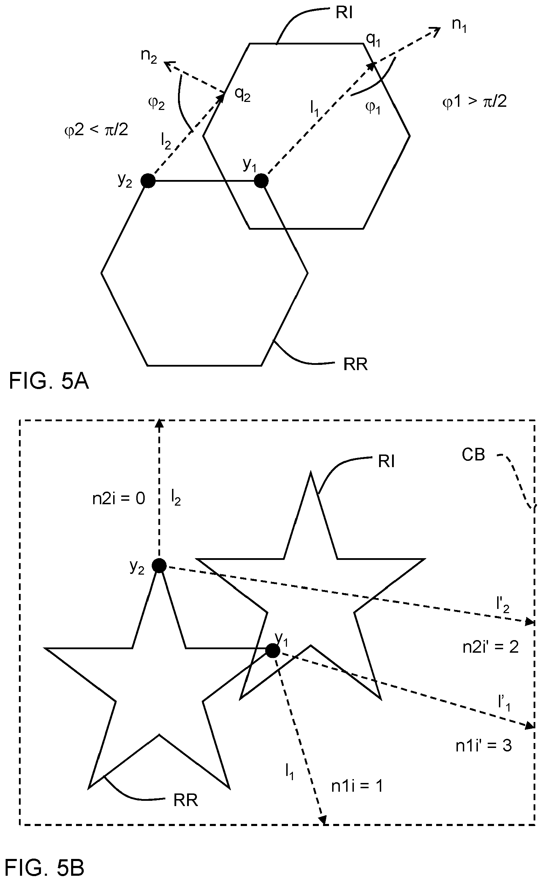

FIG. 5 demonstrates an efficient method that is readily applicable in case the 3-dimensional boundary representation is provided as a point cloud representation. In this FIG. $x_0$, $x_1$, and $x_2$ are points in the point cloud representation X obtained from the imaging system or from a database, and $y_1$ is a point of the 3-dimensional reference representation of the workpiece closest to the point $x_1$. It can be estimated with reasonable certainty whether or not the point $y_1$ is inside the volume of the 3-dimensional boundary representation as follows:

A normal vector v of the surface of X at the position of point $x_i$ is computed. The surface can therewith be approximated as a quadratic surface interpolated through the point $x_1$ and its nearest neighbors, $x_0$, $x_2$ and a further neighbor. A second vector u is defined extending between the point $x_1$ of the 3-dimensional boundary representation and the point $y_1$ of the 3-dimensional reference representation. Then, provided that the surface of the 3-dimensional boundary representation near point $x_1$ is sufficiently smooth, it can be determined with reasonable accuracy that the point $y_1$ is at a position outside the boundary defining volume of X if $\varphi \leq \dfrac{\pi}{2}$ , wherein $\varphi$ is the angle between the vectors v and v, i.e.:

$$\cos(\varphi) = \frac{u.v}{\|u\| \cdot \|v\|}$$

The method is also applicable for the case that a triangle representation is used as the 3-dimensional boundary representation. In that case, the surface normal is the normal vector of the triangle closest to point $y_1$.

Two more generally applicable approaches are demonstrated with reference to FIG. 5A and 5B.

According to a first approach, as shown in FIG. 5A, determining whether or not the reference position, e.g. $y_1$, $y_2$ is inside the boundary defining volume comprises constructing a line $l_1$, $l_2$ that extends from the reference position and that has a first intersection $q_1$, $q_2$ with the surface of the boundary defining volume and subsequently determining an angle $\varphi_1$, $\varphi_2$ of the constructed line $l_1$, $l_2$ with the surface normal $n_1$, $n_2$ at the intersection. By way of example, starting from the reference position $y_1$ a line $l_1$ is constructed that has a first intersection $q_1$ with the surface of the boundary defining volume. It can be seen in FIG. 5A that the angle $\varphi_1$ of the constructed line $l_1$ with the surface normal $n_1$ at the intersection $q_1$ exceeds $\pi/2$. Accordingly, it is concluded that the reference position $y_1$, is inside the boundary defining volume. Regardless in which direction the line $l_1$ is constructed this would be the case. Therewith it suffices to construct the line $l_1$ in a predetermined direction, for example in the direction of a main axis of the coordinate space. Starting from the reference position $y_2$ a line $l_2$ is constructed that has an angle $\varphi_2$ with the surface normal $n_2$ at the intersection $q_2$ less than $\pi/2$. Accordingly, it is concluded that the reference position $y_2$, is outside the boundary defining volume. In any case a line $l_2$ can be constructed that intersects the boundary defining volume, and for any such intersecting line it will be concluded that it has an angle $\varphi_2$ with the surface normal $n_2$ that is less than $\pi/2$. If a line starting from a reference position does not intersect the boundary defining volume at all, it is also concluded that the corresponding reference position is outside the boundary defining volume, see also the alternative approach described with reference to FIG. 5B.

By way of example, the surface of the boundary defining volume is defined with a triangle representation. In this example the angle to be determined is the angle of the constructed line with the surface normal of the intersected triangle of the triangle based representation.

FIG. 5B depicts an alternative approach wherein determining whether or not the reference position $y_1$, $y_2$ is inside the boundary defining volume comprises constructing a pseudo-infinite line that extends from the reference position $y_1$, $y_2$ to a boundary CB of space wherein the method is performed and subsequently determining whether a number of intersections n1i, n1i', n2i, n2i' between the pseudo-infinite line and the surface of the boundary defining volume is odd or even. It is noted that the boundary CB of space wherein the method is performed is determined by the binary representation of the coordinates in that space. For example if the coordinates are specified as an unsigned integer, the boundary of space for a coordinate axis are between 0 and $2^m-1$, wherein m is the number of bits. If the coordinates are specified as floating point numbers then a substantially larger coordinate space is available between the boundary CB. By way of example for a reference position $y_1$ it is determined that the corresponding pseudo-infinite lines have an odd number of intersections. For example pseudo-infinite line $l_1$ has one intersection (nli=1) with the boundary defining volume and pseudo-infinite line $l'_1$ has three intersections (n1'i=3) with the boundary defining volume. As another example, for any pseudo-infinite line starting from a reference position $y_2$ outside the boundary defining volume it is determined that the number of intersections with the boundary defining volume is even. For example for line $l_2$ the number of intersections is zero (n2i =0), and for line $l'_2$ the number of intersections is two (n2i' = 2).

By way of example, the surface of the boundary defining volume is defined with a triangle representation it is determined whether the intersected number of triangles is odd or even.

In practice determining whether a reference point is inside or outside the boundary defining volume can be simplified by computational shortcuts. For example it may be determined first if a bounding box of the reference representation is disjunct from a bounding box of the boundary defining volume. If that is the case it can immediately be concluded that all reference positions of the reference representation are outside the boundary defining volume. If that is not the case, it can be determined for a particular reference position whether it is outside the bounding box of the boundary defining volume. If that is the case it can immediately be concluded that the particular reference position is outside the boundary defining volume

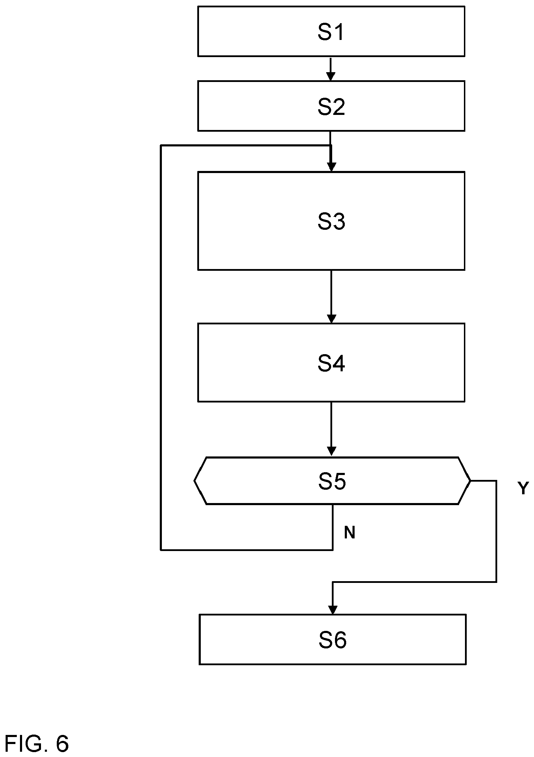

FIG. 6 schematically shows steps of a method performed by embodiments of the improved apparatus during operation.

A 3-dimensional reference representation RR of a model of a workpiece WP is obtained in a step S1. By way of example the 3-dimensional reference representation RR is provided as a point cloud, as a mesh or as a voxel representation. The 3-dimensional reference representation RR may be created by a human designer, for example with a CAD-system. Alternatively the 3-dimensional reference representation RR may be computed by an algorithm, for example instructed to provide an object that meets certain design requirements. For example, starting from a general model of a container for holding liquids or gases, the algorithm is instructed to generate a specific model of a container that meets requirements concerning pressure resistance, volume, shape constraints and the like. Also, the 3-dimensional reference representation RR whether of human or machine origin may be adapted after each production stage to reflect the operations that have been performed in the production stage.

Also in a step S2 a 3-dimensional boundary representation RI is obtained as it is actually present in the workpiece holder 2 of the apparatus. Likewise a 3-dimensional boundary representation can be provided in any form, e.g. as a point cloud, as a mesh or as a voxel representation. Various imaging devices are suitable for this purpose, for example a stereo camera, a laser scanner and the like. Alternatively the 3-dimensional boundary representation is readily available in a database, in which case an imaging system is superfluous.

An iterative procedure is then performed until a stop criterion is complied with. Each iteration of the iterative procedure comprises computation S3 of an error measure indicative for a mismatch between the orientation of the 3-dimensional boundary representation and the 3-dimensional reference representation based on a plurality of error indicators and performing S4 a spatial transformation to reduce the error measure. The spatial transformation can be described as:

$$h_i(x) = R(\alpha)p_i + t$$

Therein a point $p_i$ of the reference model RR is mapped by the transformation to a point $h_j(x)$

In the example shown, the computation S3 of the error measure may comprise a preliminary step, wherein pairs of nearest points, one each of the reference representation RR and the boundary representation RI are matched, for example with a Kd tree nearest neighbor method. Subsequently the pairs of nearest points identified therewith can be used to compute an error term for each of the identified pairs in one of various ways, e.g. according to the point-to-point approach, the point-to-plane approach and the plane-to-plane approach. The error terms are then weighted and summed.

In step S4 an iteration is performed of a procedure wherein the parameters of the spatial transformation h are initialized or updated, and it is verified whether the spatial transformation h complies with the stop criterion in step S5.

If this is the case, the controller 6 controls the actuator system 42, 43 to repose the material from which the 3-dimensional workpiece WP is to be manufactured in accordance with the spatial transformation h computed in the iterative procedure S3, S4, S5. Otherwise iteration continues.

The iterative procedure S3, S4, S5 can be performed in one of various ways, for example by the Gauss-Newton method, a quasi-Newton method, a BFGS method, the steepest descent method and the like. In one example the Gauss-Newton method is used, which involves the flowing steps.

The Jacobian is computed, which specifies the partial derivatives ($\frac{h_i(x)}{\partial x}$) of the spatial transformation ($h_i(x)$) with respect to its parameters x. Therein:

$$\frac{\partial h_i(x)}{\partial x} = \left( \frac{\partial h_i(x)}{\partial t} \quad \frac{\partial h_i(x)}{\partial \alpha_x} \quad \frac{\partial h_i(x)}{\partial \alpha_y} \quad \frac{\partial h_i(x)}{\partial \alpha_z} \right)$$

Wherein:

$$\frac{\partial h_i(x)}{\partial t} = I$$

$$\frac{\partial h_i(x)}{\partial \alpha_x} = R'_x R_y R_z p_i$$

$$\frac{\partial h_i(x)}{\partial \alpha_y} = R_x R'_y R_z p_i$$

$$\frac{\partial h_i(x)}{\partial \alpha_z} = R_x R_y R'_z p_i$$

$R_x$, $R_y$, $R_z$, $R'_x$, $R'_y$, $R'_z$ respectively specify a rotation around the x-axis by an angle $\alpha_x$, a rotation around the y-axis by an angle $\alpha_y$, a rotation around the z-axis by an angle $\alpha_z$, and their derivatives.
In matrix notation these are:

$$R_x = \begin{pmatrix} 1 & 0 & 0 \\ 0 & c & -s \\ 0 & s & c \end{pmatrix}, R_y = \begin{pmatrix} c & 0 & s \\ 0 & 1 & 0 \\ -s & 0 & c \end{pmatrix}, R_z = \begin{pmatrix} c & -s & 0 \\ s & c & 0 \\ 0 & 0 & 1 \end{pmatrix}$$

Therein for each rotation $R_j$, wherein j indicates the axis x,y,z the symbols c and s respectively specify $\cos \alpha_j$ and $\sin \alpha_j$. Their derivatives can be specified as

$$R'_x = \begin{pmatrix} 0 & 0 & 0 \\ 0 & -s & -c \\ 0 & c & -s \end{pmatrix}, R'_y = \begin{pmatrix} -s & 0 & c \\ 0 & 0 & 0 \\ -c & 0 & -s \end{pmatrix}, R'_z = \begin{pmatrix} -s & -c & 0 \\ c & -s & 0 \\ 0 & 0 & 0 \end{pmatrix}$$

Wherein $R'_j = \delta R / \delta \alpha_j$ Then the matrices H (hessian) and g are computed as

$$H = \sum_i H_i = \sum_n J_i^T J_i$$

$$g = \sum_i g_i = \sum_i J_i^T e_i$$

Therein $e_i$ is a quadratic error indicator indicative for the deviation between each point $p_i$ in the world frame, i.e. a point of the reference model and a closest point $z_i$ in the robot frame, a point of the workpiece as it is perceived by the imaging system.
Having computed the matrices H, g the following equation is solved:

$$\Delta x = -H^{-1}g$$

Wherein $\Delta x$ is the step with which the parameters x of the mapping function h are updated, i.e.

$$t_x \leftarrow t_x + \Delta t_x, t_y \leftarrow t_y + \Delta t_y, t_z \leftarrow t_z + \Delta t_z,$$

and

$$\alpha_x \leftarrow \alpha_x + \Delta \alpha_x, \alpha_y \leftarrow \alpha_y + \Delta \alpha_y, \alpha_z \leftarrow \alpha_z + \alpha t_z.$$

As noted, in step S5 it is determined whether or not the procedure has been sufficiently converged, for example by determining whether or not the sum of the quadratic error indicators is less than a threshold value. If this is the case (Y), the workpiece is aligned in step S6 by controlling the actuator system in accordance with the mapping function h. If this is not the case (N), the procedure starts with a further iteration by proceeding in step S3.

It is another option to restrict the number of iterations to a maximum. In that case a warning signal may be issued if upon completion of this maximum number of iterations convergence has not yet been achieved.

It is further noted that the computation of the Hessian H and the matrix g may be based on a subset of point pairs. This will reduce the computational cost per iteration, but may increase the number of iterations as the accuracy of the computation decreases therewith.

**Claims**

1.  A computer-implemented method for reposing relative to each other a 3-dimensional workpiece (WP) and a reference model of the workpiece having a 3-dimensional reference representation (RR), the method comprising,

    obtaining (S2) a 3-dimensional boundary representation (RI) of boundary defining volume for the workpiece;
    repeating steps (S3, S4) of an iterative procedure until a stop criterion (S5) is complied with;
    wherein each iteration of the iterative procedure comprises:

      computing (S3) an error measure based on a plurality of error indicators;
      performing (S4) a spatial transformation to reduce the error measure;

    wherein each error indicator is indicative for a distance between a reference pose of the 3-dimensional reference representation (RR) of the reference model and a boundary pose of the 3-dimensional boundary representation and
    wherein each error indicator is weighted according to a weighting function that assigns a smaller weight to the error indicator if the reference position is determined to be inside the boundary defining volume defined by the 3-dimensional boundary representation (RI) than to an error indicator having the same magnitude if the reference position is determined to be outside the boundary defining volume.

2.  The method according to claim 1, wherein determining whether or not the reference position ($y_1$, $y_2$) is inside the boundary defining volume comprises: constructing a line ($l_1$, $l_2$) that extends from the reference position and that has a first intersection ($q_1$, $q_2$) with the surface of the boundary defining volume;

    determining an angle ($\varphi_1$, $\varphi_2$) of the constructed line ($l_1$, $l_2$) with the surface normal ($n_1$, $n_2$) at the intersection;
    determining that the reference position ($y_2$) is outside the boundary defining volume if the angle is less than $\pi/2$;
    determining that the reference position ($y_1$) is inside the boundary defining volume otherwise.

3.  The method according to claim 1, wherein determining whether or not the reference position ($y_1$, $y_2$) is inside the boundary defining volume comprises constructing a pseudo-infinite line that extends from the reference position ($y_1$, $y_2$) to a boundary (CB) of space wherein the method is performed;

    determining whether a number of intersections (nli, nli', n2i, n2i') between the pseudo-infinite line and the surface of the boundary defining volume is odd or even;
    determining that the reference position (y2) is outside the boundary defining volume if the number (n2i, n2i') is even (including 0);
determining that the reference position (y1) is inside the boundary defining volume otherwise.

4. The method according to claim 1, wherein determining whether or not the reference position $(y_1)$ is inside the boundary defining volume comprises:

computing a normal vector (v) of a surface of the boundary defining volume at a position of a point $(x_1)$ of the surface closest to the reference position $(y_1)$;

computing a second vector (u) that extends between the reference position $(y_1)$ and a point $(x_1)$ of the boundary defining volume; and

determining that the reference position $(y_1)$ is at a position outside the boundary defining volume if $\varphi \leq \dfrac{\pi}{2}$, wherein $\varphi$ is the angle between the normal vector (v) and the second vector (u) and determining that the reference position $(y_1)$ is at a position inside the boundary defining volume otherwise.

5. The method according to one of the preceding claims, wherein the weight $(w_i)$ applied to an error term $(e_i)$ is defined as:

$$w_i(d_i) = \begin{cases} -c_1(d_i - c_0) \ if \ d_i \leq c_0 \\ c_2(d_i - c_0) \ if \ d_i \ \geq \ c_0 \end{cases}$$

wherein di is a signed distance between the reference position and a position of a point $(x_1)$ of the surface of the boundary defining volume closest to the reference position $(y_1)$, wherein the sign of the signed distance is negative if it is determined that the reference position $(y_1)$ is inside the boundary defining volume, and the sign is positive otherwise, and wherein $c_0 < 0$, and wherein $0 < c_1 < c_2$.

6. The method according to one of the preceding claims, wherein the error indicator is further weighted according to a kernel function that suppresses outliers.

7. The method according to claim 6, wherein the kernel function comprises a Gaussian function that models the imaging noise.

8. The method according to claim 7, wherein the kernel function comprises an additive term that is relatively small as compared to the values of the Gaussian function.

9. The method according to one of the preceding claims, wherein the error indicator $(e_i)$ is the squared distance between an input position $(x_i)$ on a surface specified by a first one of the 3-dimensional representations and a matching position $(y_i)$ on a surface specified by a second one of the 3-dimensional representations.

10. The method according to one of the claims 1 to 8, wherein the error indicator $(e_i)$ is the squared distance between an input position $(x_i)$ on a surface specified by a first one of the 3-dimensional representations and a normal projection $(\tilde{y}_i)$ of that position on a tangential plane $(t_i)$ of a second one of the 3-dimensional representations at a matching position $(y_i)$ of the surface specified by the second one of the 3-dimensional representations.

11. The method according to one of the claims 1 to 8, wherein the error indicator $(e_i)$ is the squared sum of a first distance $(d_{xi})$ and a second distance $(d_{yi})$, respectively being the distances from an input position $(x_i)$ and a matching position $(\overline{y}_i)$ in a direction normal to a center plane $(t_{xy,i})$, wherein the input position $(x_i)$ is a first point of a first one of the 3-dimensional representations and the matching position $(\overline{y}_i)$ is a point, closest to the first point, of the second one of the 3-dimensional representations, and wherein the center plane is a plane that is symmetrically arranged between a first tangential plane of the first one of the 3-dimensional representations at the first point and a second tangential plane of the second one of the 3-dimensional representations at the second point $(y_i)$.

12. A reposing apparatus (1) for reposing relative to each other a workpiece (WP) and a reference model of the workpiece having a 3-dimensional reference representation (RR), comprising:

a holder (2) for holding the workpiece (WP);
an actuator system (42, 43) for setting an orientation of the workpiece (WP) relative to a reference coordinate system;

a facility (5; 5a, 5b, 5c) for obtaining a 3-dimensional boundary representation (RI) of a boundary defining volume for the workpiece (WP);

a controller (6) for controlling the actuator system (42, 43), wherein the controller is configured to control the actuator system (42, 43) based on a comparison of the 3-dimensional boundary representation (RI) and a 3-dimensional reference representation (RR) of a reference model of the workpiece in the reference coordinate system;

wherein the controller (6) is configured to repeat steps of an iterative procedure until a stop criterion is complied with, wherein each iteration of the iterative procedure comprises:

computing an error measure (E) based on a plurality of error indicators ($e_i$) indicative for mismatches between the 3-dimensional boundary representation (RI) and the 3-dimensional reference representation (RR); (E); computing a spatial transformation (h) to reduce the error measure

wherein each error indicator (Ei) has a magnitude indicative for a distance between a reference position of the 3-dimensional reference representation (RR) and an input position of the 3-dimensional boundary representation,

**characterized in that** the controller (6) is configured to:

determine whether or not reference position is inside the boundary defining volume; and

when computing the error measure (E) to weight the error indicators ($e_i$) according to a weighting function that assigns a smaller weight to an error indicator if the reference position is determined to be inside the boundary defining volume than in case the input position is determined to be outside the boundary defining volume.

13. The reposing apparatus according to claim 12, configured to determine whether or not the reference position ($y_1$) is inside the boundary defining volume with the method of any of claims 2-4.

14. The reposing apparatus according to claim 12 or 13, wherein the weight ($w_i$) applied to an error term ($e_i$) is defined as:

$$w_i(d_i) = \begin{cases} -c_1(d_i - c_0) \; if \; d_i \leq c_0 \\ c_2(d_i - c_0) \; if \; d_i \; \geq \; c_0 \end{cases}$$

wherein di is a signed distance between the reference position and a position of a point ($x_1$) of the boundary defining volume closest to the reference position ($y_1$), wherein the sign of the signed distance is negative if it is determined that the reference position ($y_1$) is inside the boundary defining volume, and the sign of the signed distance if it is determined that the reference position ($y_1$) is outside the boundary defining volume and wherein $c_0 < 0$, and wherein $0 < c_1 < c_2$.

15. The reposing apparatus according to claim 12, 13 or 14, wherein the error indicator is further weighted according to a kernel function that suppresses outliers.

16. A manufacturing apparatus (1) for processing a workpiece (WP), comprising the reposing apparatus of claim 12, 13, 14 or 15 and further comprising:

a machining tool (3) for processing the workpiece;

wherein the actuator system (42, 43) is configured for setting an orientation of the machining tool (3) and the workpiece (WP) relative to each other after the stop criterion is complied with, in accordance with the computed spatial transformation.

17. A record carrier (7) having stored thereon a computer program with instructions to cause a programmable device (6) to perform the steps of the method of any one of the claims 1-11.

FIG. 1

FIG. 2

FIG. 2A

FIG. 3

RI

$y_q$

$y_i$ $y_{i+1}$ $y_{i+2}$

$x_{i+2}$

$x_i$ $x_{i+1}$

RR

FIG. 4A

$\bar{y}_i$ $t_i$ RI

$y_q$ $y_{i+2}$

$y_i$ $y_{i+1}$

$x_i$ $x_{i+1}$ $x_{i+2}$

RR

FIG. 4B

$\bar{y}_i$

$t_i$

$\bar{y}_{i+1}$ RI

$n_{yi}$

$t_{i+1}$ $\bar{y}_{i+2}$

$x_i$ $n_{y,i+1}$ $t_{i+2}$

$x_{i+1}$ $x_{i+2}$

$n_{y,i+2}$

$\bar{y}_i$ $n_{y,i}+n_{x,i}$

$t_{xy,i}$ $d_{yi}$

RR

FIG. 4C $d_{xi}$

$x_i$

FIG. 4CC

FIG. 5

FIG. 5A

FIG. 5B

FIG. 6

Europäisches
Patentamt

European
Patent Office

Office européen
des brevets

# EUROPEAN SEARCH REPORT

**Application Number**

EP 23 20 5903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 177 013 A1 (VATHOS GMBH [DE]) 10 May 2023 (2023-05-10) * paragraphs [0026] - [0030], [0131] - [0135] * | 1-17 | INV. G05B19/402 |
| A | WO 2020/223594 A2 (KODAK ALARIS INC [US]) 5 November 2020 (2020-11-05) * page 43, line 24 - page 47, line 27; figure 18c * | 1-17 | |
| A | US 5 208 763 A (HONG JIAWEI [US] ET AL) 4 May 1993 (1993-05-04) * column 1, line 35 - line 53 * * column 2, line 20 - column 3, line 40 * | 1-17 | |
| A | US 2016/139587 A1 (JARVIS MATTHEW T [US] ET AL) 19 May 2016 (2016-05-19) * paragraphs [0001] - [0013], [0057], [0058], [0071] - [0076] * | 1-17 | |
| A | US 2020/134860 A1 (HAVEN G NEIL [US] ET AL) 30 April 2020 (2020-04-30) * paragraphs [0001] - [0015] * | 1-17 | **TECHNICAL FIELDS SEARCHED (IPC)** G05B |

The present search report has been drawn up for all claims

| Place of search | Date of completion of the search | Examiner |
|---|---|---|
| Munich | 28 March 2024 | Frey, Richard |

EPO FORM 1503 03.82 (P04C01)

## ANNEX TO THE EUROPEAN SEARCH REPORT
## ON EUROPEAN PATENT APPLICATION NO.

**EP 23 20 5903**

This annex lists the patent family members relating to the patent documents cited in the above-mentioned European search report.
The members are as contained in the European Patent Office EDP file on
The European Patent Office is in no way liable for these particulars which are merely given for the purpose of information.

**28-03-2024**

| Patent document cited in search report | | Publication date | Patent family member(s) | | Publication date |
|---|---|---|---|---|---|
| EP 4177013 | A1 | 10-05-2023 | EP | 4177013 A1 | 10-05-2023 |
| | | | EP | 4326500 A1 | 28-02-2024 |
| | | | WO | 2023078884 A1 | 11-05-2023 |
| WO 2020223594 | A2 | 05-11-2020 | CN | 114041168 A | 11-02-2022 |
| | | | EP | 3963414 A2 | 09-03-2022 |
| | | | WO | 2020223594 A2 | 05-11-2020 |
| US 5208763 | A | 04-05-1993 | US | 5208763 A | 04-05-1993 |
| | | | WO | 9205399 A1 | 02-04-1992 |
| US 2016139587 | A1 | 19-05-2016 | EP | 3218771 A1 | 20-09-2017 |
| | | | US | 2016139587 A1 | 19-05-2016 |
| | | | WO | 2016077033 A1 | 19-05-2016 |
| US 2020134860 | A1 | 30-04-2020 | CA | 3117796 A1 | 07-05-2020 |
| | | | EP | 3874227 A1 | 08-09-2021 |
| | | | JP | 7362146 B2 | 17-10-2023 |
| | | | JP | 2022506235 A | 17-01-2022 |
| | | | US | 2020134860 A1 | 30-04-2020 |
| | | | US | 2020410712 A1 | 31-12-2020 |
| | | | WO | 2020092292 A1 | 07-05-2020 |

EPO FORM P0459

For more details about this annex : see Official Journal of the European Patent Office, No. 12/82